# EUROPÄISCHE PATENTSCHRIFT

(11) **EP 2 321 105 B1**
(45) Veröffentlichungstag und Bekanntmachung des Hinweises auf die Patenterteilung: **07.11.2012**
(21) Anmeldenummer: 09768954.1
(22) Anmeldetag: 22.06.2009
(51) Int. Cl.: B29C 33/20, B29C 70/30, B29L 31/08

(54) **VERFAHREN UND FERTIGUNGSFORM ZUR FERTIGUNG EINES ROTORBLATTES FÜR EINE WINDENERGIEANLAGE**
METHOD AND MANUFACTURING MOLD FOR THE PRODUCTION OF A ROTOR BLADE FOR A WIND TURBINE
PROCÉDÉ ET MOULE DE FABRICATION POUR LA PRODUCTION DE PALE DE ROTOR D'ÉOLIENNE

(30) Priorität: 27.06.2008 DE 102008030132; 31.07.2008 DE 102008035588; 12.08.2008 DE 102008038620
(43) Veröffentlichungstag der Anmeldung: 18.05.2011
(73) Patentinhaber: REpower Systems SE, 22297 Hamburg (DE); PowerBlades GmbH, 27572 Bremerhaven (DE)
(72) Erfinder: FAULKNER, Benn, Ningwood Isle of Wight PO 30 4 NH (GB); EYB, Enno, 24118 Kiel (DE); HOFMANN, Christoph, 28757 Bremen (DE)
(74) Vertreter: Seemann, Ralph
(86) Internationale Anmeldenummer: PCT/EP2009/004478
(87) Internationale Veröffentlichungsnummer: WO 2009/156105

(56) Entgegenhaltungen:
- WO-A-2004/043679
- WO-A-2007/054088
- DE-C1- 19 833 869

## Beschreibung

Die Erfindung betrifft eine Fertigungsform zur Fertigung eines Rotorblattes für eine Windenergieanlage, wobei das fertige Rotorblatt wenigstens in einem Bereich seiner Längserstreckung, zwischen einer Rotorblattwurzel und einer Rotorblattspitze, ein aerodynamisches Querschnittsprofil aufweist, das eine Profilvorderkante (Nase) und eine Profilhinterkante aufweist, die über eine Saugseite und eine Druckseite des Querschnittprofils miteinander verbunden sind.

Des Weiteren betrifft die Erfindung ein Verfahren zur Fertigung eines Rotorblatts für eine Windenergieanlage.

Eine gattungsgemäße Fertigungsform ist zum Beispiel aus der WO2004/043679 bekannt.

WO2007/054088 A1 offenbart eine Fertigungsform für Rotorblätter einer Windenergieanlage, die aus zwei Formteilen besteht gemäß dem Oberbegriff des Anspruchs 1.

Der Erfindung liegt die Aufgabe zugrunde, eine geteilte Fertigung eines Rotorblatts derart zu verbessern, dass die Handhabung der Fertigungsform erleichtert wird und das fertige Rotorblatt von dieser Erleichterung in seiner Qualität unbeeinträchtigt bleibt.

Diese Aufgabe wird erfindungsgemäß dadurch gelöst, dass die Fertigungsform entlang wenigstens einer Trennfläche, die sich in Längsrichtung des Rotorblattes und zwischen der Profilvorderkante und der Profilhinterkante unter gleichzeitiger Teilung der Saugseite und der Druckseite erstreckt, in einen Fertigungsformteil zur Fertigung eines die Profilvorderkante umfassenden Rotorblattteiles und in einen Fertigungsformteil zur Fertigung eines die Profilhinterkante umfassenden Rotorblattprofilteils teilbar ist.

Erfindungsgemäß erfolgt die Teilung der Fertigungsform im Wesentlichen orthogonal zu der TeiJung der weiter oben genannten bekannten Fertigungsform. Hierdurch ergeben sich Vorteile bei dem Trennungsvorgang der Fertigungsformteile und der Zusammenführung, wobei das fertige Rotorblatt ebenfalls Vorteile aufweisen kann, weil jeweils die Profilhinterkante und die Profilvorderkante im Ganzen gefertigt werden können.

Vorzugsweise ist dabei die Trennfläche etwa lotrecht orientiert, so dass das Profil in einer flachen Orientierung verbleibt. Dadurch können die Fertigungsformteile mit Vorteil auf derselben Ebene auseinander- und wieder zusammengerückt werden. Es wäre aber auch denkbar, das Profil so zu fertigen, dass das fertige Profil eher hochkant orientiert ist, wobei die Fertigungsformteile zu ihrer Trennung voneinander abgehoben und/oder verschwenkt werden könnten. Unter lotrecht wird insbesondere vertikal verstanden. Etwa lotrecht bedeutet insbesondere bis zu ± 15° von der Vertikalen, bevorzugt in der Vertikalen.

Eine Weiterbildung der Erfindung zeichnet sich dadurch aus, dass wenigstens einer der Fertigungsformteile seinerseits teilbar ist.

Dies erleichtert mit Vorteil weiter die Handhabbarkeit der Formen und die Fertigung des Rotorblatts durch Segmentierung, wiederum ohne Qualitätseinbuße beim fertigen Rotorblatt.

Nach einer nächsten Weiterbildung der Erfindung ist vorgesehen, dass eine Trennfläche zur Teilung des teilbaren Fertigungsformteils etwa orthogonal zur Trennfläche zur Teilung der Fertigungsformteile orientiert ist. Dadurch könnte insbesondere zusätzlich ganz oder abschnittweise eine Teilung wie bei der zitierten, bekannten Fertigungsform vorgesehen sein. Auch die zweite Trennfläche könnte sich somit im Wesentlichen in Längsrichtung des Rotorblattes erstrecken. Es wäre aber auch eine Querteilung der Fertigungsform und des Rotorblattes denkbar. Eine bevorzugte Ausführungsform der erfindungsgemäßen Fertigungsform sieht vor, dass die Fertigungsform in zwei Fertigungsformteile teilbar ist, die beide ihrerseits jeweils derart noch einmal teilbar sind, dass das in ihnen zu fertigende Rotorblattprofil etwa geviertelt erscheint.

Wenigstens zwei voneinander teilbare Fertigungsformteile können über eine Art Gelenk miteinander verbunden bleiben, um das Schließen der Form zu erleichtern.

Eine andere Weiterbildung der Erfindung zeichnet sich dadurch aus, dass einer der Fertigungsformteile, trotz Teilung der Fertigungsform, wenigstens weitgehend zur Ausformung einer ungeteilten Profilvorderkante ausgebildet und vorgesehen ist. Damit wird mit Vorteil ein Problem bekannter Fertigungsformen vermieden, dass die Fertigungsform eventuell in den Profilkantenbereichen nicht präzise genug bündig geschlossen wird, die Profilsegmente dadurch in diesen Bereichen nicht bündig miteinander verbunden werden und so Probleme der Aerodynamik oder der Haltbarkeit beim fertigen Rotorblatt in diesen Bereichen auftreten.

Eine Weiterbildung der Fertigungsform sieht vor, dass wenigstens einer der Fertigungsformteile zu seiner Fertigungsformfortsetzung eine bei geteilter Fertigungsform montierbare und vor einer Zusammenführung der Fertigungsform demontierbare Formergänzung aufweist, so dass Profilbereiche nahtlos über den eigentlichen Bereich des Fertigungsformteils hinaus gefertigt werden können, ohne dass dies das Schließen der Fertigungsform nach der Fertigung hindert.

Die Erfindung sieht nach einer Weiterbildung vor, dass die Fertigungsform teilbar ist, um Rotorblattteile in den Fertigungsformteilen zu fertigen, und die Fertigungsformteile, vorzugsweise zu der vollständigen Fertigungsform, wieder zusammenführbar sind, um Rotorblattteile miteinander zu verbinden, so dass das Rotorblatt in der Fertigungsform zusammengefügt und konfektioniert werden kann.

Zum passgenauen Anschluss von Fertigungsformteilen aneinander oder zueinander können Führungselemente, insbesondere Passstifte oder dergleichen, vorgesehen sein. Fertigungsformteile können miteinander verbindbar, insbesondere verriegelbar, sein.

Eine weitere Weiterbildung der Erfindung sieht mit Vorteil vor, dass zwischen voneinander getrennten Fertigungsformteilen eine Arbeitsplattform einbringbar ist, die insbesondere das Befüllen der Form mit Werkstoff für das zu fertigende Rotorblatt erleichtert. Vorzugsweise kann vorgesehen sein, dass eine auf und ab bewegbare Arbeitsplattform im, vorzugsweise lotrechten Trennungsbereich zweier Fertigungsformteile vorgesehen ist. Die Arbeitsplattform ist vorzugsweise, zumindest temporär, Bestandteil der Fertigungsform.

Für ein Verfahren zur Fertigung eines Rotorblatts mit einer Fertigungsform, vorzugsweise unter Verwendung einer erfindungsgemäßen Fertigungsform, das sich in selbstständiger Lösung der gestellten Aufgabe dadurch auszeichnet, dass die Fertigungsform geteilt wird, Rotorblattteile in Teilen der Fertigungsform gefertigt werden und die Fertigungsform wieder geschlossen wird, um die Rotorblattteile miteinander zu verbinden, vorzugsweise miteinander zu verkleben, wird auch selbstständiger Schutz beansprucht.

Bevorzugt werden die Rotorblattteile mit einer Kunststofftechnik gefertigt, vorzugsweise wird bei der Kunststofftechnik wenigstens ein Harz und wenigstens eine Faserlage, insbesondere aus Glasfasern und/oder Kohlefasern, verwendet.

Insbesondere könnten für die Fertigung des Rotorblatts eine Spritzpresstechnik (Resin Transfer Moulding; RTM), eine Infusionstechnik (Resin Infusion Moulding; RIM) verwendet wird, insbesondere eine durch Vakuum unterstütze Infusionstechnik (Vacuum Assisted Resin Infusion; VAR) und/oder eine Laminiertechnik verwendet werden.

Erfindungsgemäß kann vorgesehen sein, dass wenigstens ein vorgefertigter Gurt in wenigstens einen Teil der Fertigungsform eingebracht wird oder dass Teile eines geteilten Gurtes in wenigstens zwei Teile der Fertigungsform eingebracht werden.

Vor dem Schließen der Fertigungsform könnte wenigstens ein Steg in wenigstens einen Teil der Fertigungsform eingebracht werden, wobei vorzugsweise zum formschlüssigen Anordnen des Steges an einem Rotorblattteil wenigstens eine Aufnahme für den Steg vorgesehen werden kann, insbesondere könnte die Aufnahme im Wesentlichen etwa in Form einer U-profilförmigen Schiene ausgebildet werden. Vorteilhaft kann als Steg ein einfaches, vorgefertigtes und kostengünstiges Plattenelement eingebaut werden.

Im Rahmen der Erfindung ist unter einer Trennfläche insbesondere auch eine Trennebene und/oder eine Stoßfläche zu verstehen, die gekrümmt und/oder gerade sein kann. Hierbei kann die Trennfläche auch teilweise gekrümmt und teilweise gerade sein.

Ein Ausführungsbeispiel der Erfindung, aus dem sich auch weitere erfinderische Merkmale ergeben können, auf die die Erfindung in ihrem Umfang aber nicht beschränkt ist, ist in der Zeichnung dargestellt. Es zeigen:
- Fig. 1: einen Querschnitt eines Ausführungsbeispiels einer vollständig geöffneten, noch leeren, erfindungsgemäßen Fertigungsform,
- Fig. 2: den Querschnitt gemäß Fig. 1 bei teilweise mit Werkstoff bzw. Material für das zu fertigende Rotorblatt gefüllter Fertigungsform und
- Fig. 3: den Querschnitt bei geschlossener Fertigungsform mit einem Profilquerschnitt eines Rotorblattes in ihrem Inneren.

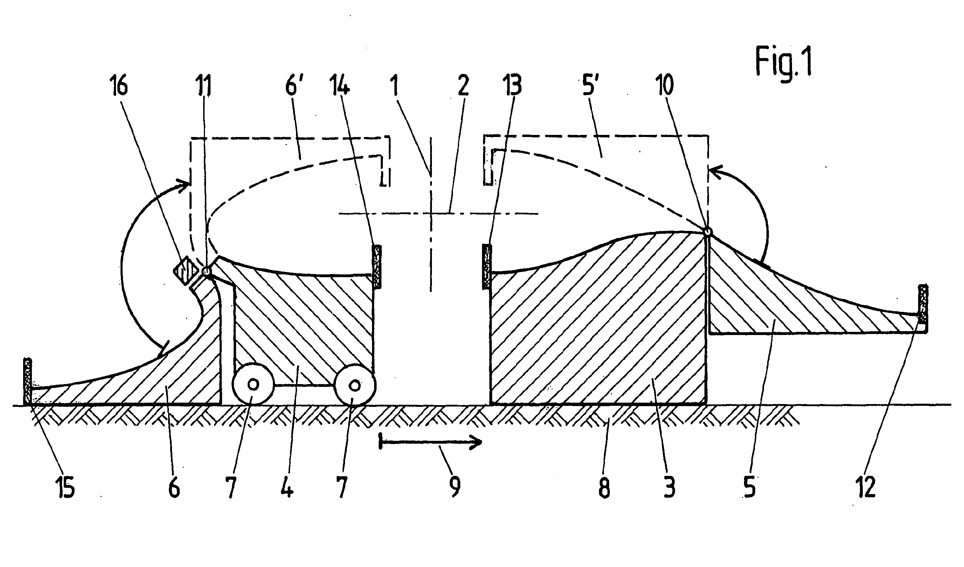

Fig. 1 zeigt einen Querschnitt eines Ausführungsbeispiels einer vollständig geöffneten, noch leeren, erfindungsgemäßen Fertigungsform.

Die Fertigungsform ist entlang zweier, zueinander orthogonaler Trennflächen 1, 2, die sich jeweils in Längsrichtung der Fertigungsform in das Zeichnungsblatt hinein und aus diesem heraus erstrecken, in ihrem Querschnitt in vier Fertigungsformteile 3 bis 6 geteilt.

Die Fertigungsformteile 3, 4 sind mit Hilfe von Rädern 7 an dem Fertigungsformteil 4 auf dem Erdboden 8 zu ihrer in Fig. 1 gezeigten Trennung auseinander fahrbar und in Richtung eines Pfeils 9 wieder zusammenfahrbar. An den Fertigungsformteilen 3, 4 sind die weiteren Fertigungsformteile 5 bzw. 6 jeweils abklappbar über Gelenke 10, 11 angeordnet. Diese Fertigungsformteile 5, 6 sind in Fig. 1 in ihrer Öffnungsstellung gezeigt und in ihrer Schließstellung, in der das Querschnittsprofil eines zu fertigenden Rotorblatts erkennbar wird, mit gestrichelten Linien 5', 6' angedeutet.

Zusätzlich sind an den Fertigungsformteilen 3 bis 6 ansetzbare und vor dem Verschließen der Fertigungsform wieder abnehmbare Formergänzungen 12 bis 16 angeordnet. Insbesondere die Formergänzung 16 dient dazu, einen nahtlosen, vollständigen Profilvorderkantenbereich des Rotorblatts ausformen zu können.

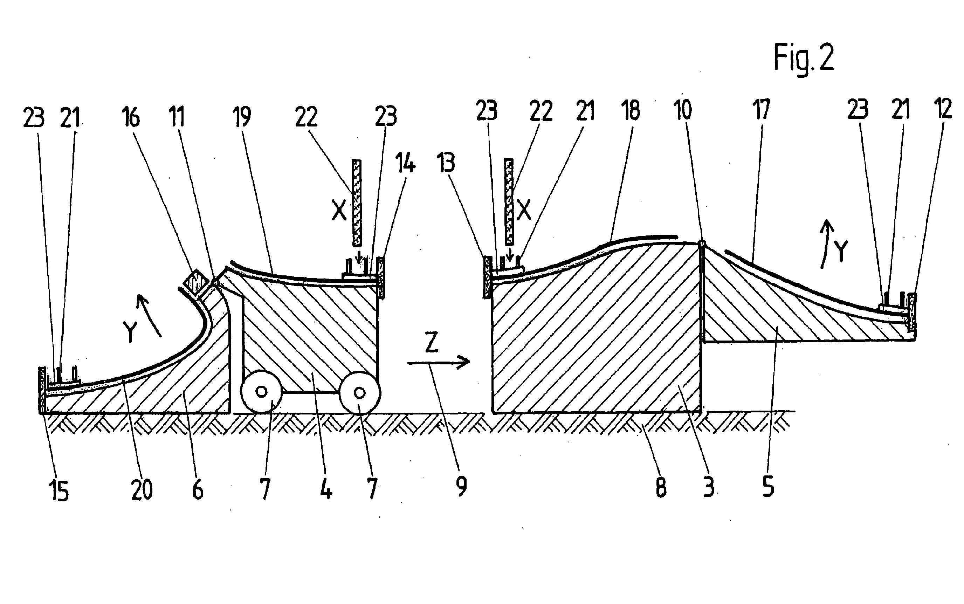

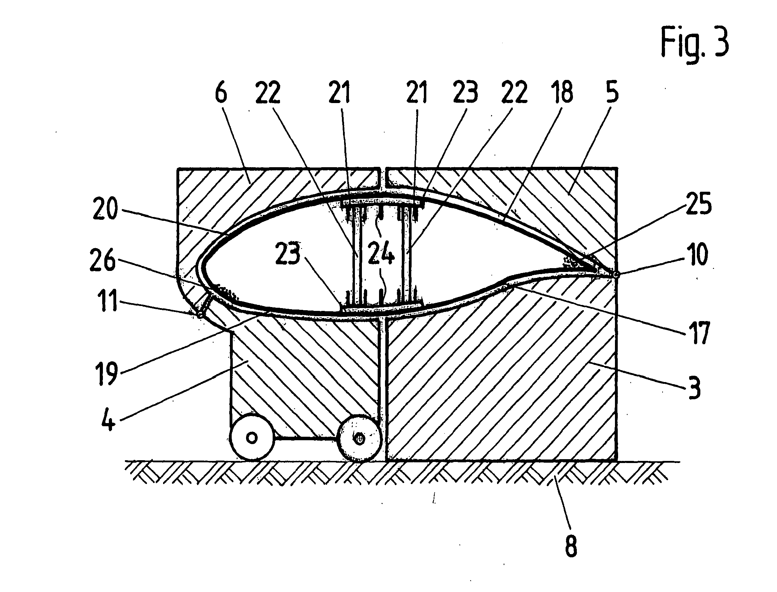

Fig. 2 zeigt den Querschnitt der Fertigungsform aus Fig. 1 mit bereits einigem Material für ein Rotorblatt. Gleiche Bauelemente sind, wie auch in Fig. 3, mit den gleichen Bezugszahlen bezeichnet.

In den Fertigungsformteilen 3 bis 6 sind insbesondere Schalenteile 17 bis 20 eines Rotorblattes bereits ausgeformt. Diese können bevorzugt mittels einer Vakuuminfusion unter Verwendung von Fasergelegen und Harz in den Fertigungsformteilen 3 bis 6 ausgebildet und geformt worden sein. Die Einbringung von Fasergelegen und die Ausbildung von Vakuumkammern wird durch die erfindungsgemäße Teilung der Fertigungsform in handlichere Fertigungsformteile 3 bis 6 erleichtert, ebenso wie die Handhabung der Rotorblattschalenteile 17 bis 20, insbesondere bei einem eventuellen Ausschuss nur in einem der Fertigungsformteile 3 bis 6. Die Verwendung von vorgeformten oder vorausgebildeten Teilen, insbesondere sogenannter Prepregs, in der erfindungsgemäßen Fertigungsform und bei dem erfindungsgemäßen Verfahren ist natürlich nicht ausgeschlossen.

Zudem sind in den Schalenteilen 17 bis 20 U-förmige Aufnahmen 21 für Stege 22 angeordnet oder angeformt, in die Stege 22 vor dem Verschließen der Fertigungsform einfach eingesteckt und zum Beispiel verklebt werden können. Diese Aufnahmen 21 befinden sich vorzugsweise an Gurtteilen 23, die in die Fertigungsformteile 17 bis 20 eingelegt wurden.

Buchstaben X, Y, Z symbolisieren die zeitliche Reihenfolge, in der zunächst die Stege 22 eingesetzt werden., dann die Fertigungsformteile 5, 6 zugeklappt und schließlich die Fertigungsformteile 3, 4 zusammengefahren werden.

Fig. 3 zeigt die geschlossene Fertigungsform, in der ein Profilquerschnitt eines Rotorblatts zu erkennen ist. Es ist (übertrieben) angedeutet, dass die Schalenteile 18, 20 und 17, 19 jeweils über Verklebungslinien 24 miteinander verklebt sind und die Schalenteile 17, 18 zur Ausbildung einer Profilhinterkante mit Kleber 25 miteinander verklebt sind und die Schalenteile 19, 20 im Bereich einer ausgeformten Profilvorderkante mit Kleber 26 miteinander verklebt sind.

## Patentansprüche

1. Fertigungsform zur Fertigung eines Rotorblattes für eine Windenergieanlage, wobei das fertige Rotorblatt wenigstens in einem Bereich seiner Längserstreckung, zwischen einer Rotorblattwurzel und einer Rotorblattspitze, ein aerodynamisches Querschnittsprofil aufweist, das eine Profilvorderkante und eine Profilhinterkante aufweist, die über eine Saugseite und eine Druckseite des Querschnittprofils miteinander verbunden sind, **dadurch gekennzeichnet, dass** die Fertigungsform entlang wenigstens einer Trennfläche (1, 2), die sich in Längsrichtung des Rotorblattes und zwischen der Profilvorderkante und der Profilhinterkante unter gleichzeitiger Teilung der Saugseite und der Druckseite erstreckt, in einen Fertigungsformteil (4, 6) zur Fertigung eines die Profilvorderkante umfassenden Rotorblattteiles und in einen Fertigungsformteil (3, 5) zur Fertigung eines die Profilhinterkante umfassenden Rotorblattprofilteils teilbar ist.

2. Fertigungsform nach Anspruch 1, **dadurch gekennzeichnet, dass** die Trennfläche (1) etwa lotrecht orientiert ist.

3. Fertigungsform nach Anspruch 1 oder 2, **dadurch gekennzeichnet, dass** wenigstens eines der Fertigungsformteile (3-6) seinerseits teilbar ist.

4. Fertigungsform nach Anspruch 3, **dadurch gekennzeichnet, dass** eine Trennfläche (2) zur Teilung des teilbaren Fertigungsformteils (3-6) etwa orthogonal zur Trennfläche (1) zur Teilung der Fertigungsformteile (3-6) orientiert ist.

5. Fertigungsform nach Anspruch 3 und 4, **dadurch gekennzeichnet, dass** die Fertigungsform in zwei Fertigungsformteile (3-6) teilbar ist, die beide ihrerseits jeweils derart noch einmal teilbar sind, dass das in ihnen zu fertigende Rotorblattprofil etwa geviertelt erscheint.

6. Fertigungsform nach einem der vorhergehenden Ansprüche, **dadurch gekennzeichnet, dass** wenigstens zwei voneinander teilbare Fertigungsformteile (3-6) über ein Gelenk (10, 11) miteinander verbunden bleiben, wobei insbesondere eines der Fertigungsformteile (3-6), trotz Teilung der Fertigungsform, wenigstens weitgehend zur Ausformung einer ungeteilten Profilvorderkante ausgebildet und vorgesehen ist, wobei insbesondere wenigstens einer der Fertigungsformteile (3-6) zu seiner Fertigungsformfortsetzung eine bei geteilter Fertigungsform montierbare und vor einer Zusammenführung der Fertigungsform demontierbare Formergänzung (12-16) aufweist.

7. Fertigungsform nach einem der vorhergehenden Ansprüche, **dadurch gekennzeichnet, dass** die Fertigungsform teilbar ist, um Rotorblatteile in den Fertigungsformteilen (3-6) zu fertigen, und die Fertigungsformteile (3-6), vorzugsweise zu der vollständigen Fertigungsform, wieder zusammenführbar sind, um Rotorblattteile miteinander zu verbinden, wobei insbesondere zum passgenauen Anschluss von Fertigungsformteilen (3-6) aneinander oder zueinander Führungselemente, insbesondere Passstifte oder dergleichen, vorgesehen sind, wobei insbesondere Fertigungsformteile (3-6) miteinander verbindbar, insbesondere verriegelbar, sind.

8. Fertigungsform nach einem der vorhergehenden Ansprüche, **dadurch gekennzeichnet, dass** zwischen voneinander getrennten Fertigungsformteilen (3-6) eine Arbeitsplattform einbringbar ist, wobei insbesondere eine auf und ab bewegbare Arbeitsplattform im Trennungsbereich zweier Fertigungsformteile (3-6) vorgesehen ist.

9. Verfahren zur Fertigung eines Rotorblatts unter Verwendung einer Fertigungsform nach einem oder mehreren der vorhergehenden Ansprüche, **dadurch gekennzeichnet, dass** die Fertigungsform geteilt wird, Rotorblattteile (17-20) in Teilen (3-6) der Fertigungsform gefertigt werden und die Fertigungsform wieder geschlossen wird, um die Rotorblattteile (17-20) miteinander zu verbinden, vorzugsweise miteinander zu verkleben.

10. Verfahren nach Anspruch 9, **dadurch gekennzeichnet, dass** die Rotorblattteile (17-20) mit einer Kunststofftechnik gefertigt werden, wobei insbesondere bei der Kunststofftechnik wenigstens ein Harz und wenigstens eine Faserlage, insbesondere aus Glasfasern und/oder Kohlefasern, verwendet wird, wobei insbesondere eine Spritzpresstechnik verwendet wird oder eine Infusionstechnik verwendet wird, insbesondere eine durch Vakuum unterstütze Infusionstechnik.

11. Verfahren nach Anspruch 10, **dadurch gekennzeichnet, dass** eine Laminiertechnik verwendet wird.

12. Verfahren nach einem der Ansprüche 9 bis 11, **dadurch gekennzeichnet, dass** wenigstens ein vorgefertigter Gurt (23) in wenigstens einen Teil der Fertigungsform eingebracht wird, wobei insbesondere Teile eines geteilten Gurtes (23) in wenigstens zwei Teile der Fertigungsform eingebracht werden.

13. Verfahren nach einem der Ansprüche 9 bis 12, **dadurch gekennzeichnet, dass** vor dem Schließen der Fertigungsform wenigstens ein Steg (22) in wenigstens einen Teil der Fertigungsform eingebracht wird, wobei insbesondere zum formschlüssigen Anordnen des Steges (22) an einem Rotorblattteil (17-20) wenigstens eine Aufnahme (21) für den Steg (22) vorgesehen wird, wobei insbesondere die Aufnahme (21) im Wesentlichen etwa in Form einer U-profilförmigen Schiene ausgebildet wird.

14. Verfahren nach Anspruch 12, **dadurch gekennzeichnet, dass** als Steg (22) ein einfaches, vorgefertigtes Plattenelement eingebaut wird.

## Claims

1. A manufacturing mould for manufacturing a rotor blade for a wind power installation, wherein in at least one region of its length between a rotor blade root and a rotor blade tip the finished rotor blade has an aerodynamic cross sectional profile, which has a profile leading edge and a profile trailing edge, which are connected together via a suction side and a pressure side of the cross sectional profile, **characterised in that** the manufacturing mould may be split along at least one parting surface (1, 2), which extends in the longitudinal direction of the rotor blade and between the profile leading edge and the profile trailing edge whilst simultaneously dividing the suction side and the pressure side, into a manufacturing mould portion (4,6) for manufacturing a rotor blade portion including the profile leading edge and into a manufacturing mould portion (3, 5) for manufacturing a rotor blade portion including the profile trailing edge.

2. A manufacturing mould as claimed in claim 1, **characterised in that** the parting surface (1) is orientated approximately perpendicularly.

3. A manufacturing mould as claimed in claim 1 or 2, **characterised in that** at least one of the manufacturing mould members (3 to 6) may also be split.

4. A manufacturing mould as claimed in claim 3, **characterised in that** a parting surface (2) for dividing the splittable manufacturing mould member (3 to 6) is orientated approximately orthogonally to the parting surface (1) for dividing the manufacturing mould members (3 to 6).

5. A manufacturing mould as claimed in claims 3 and 4, **characterised in that** the manufacturing mould is splittable into two manufacturing mould portions, which may both be split again such that the rotor blade profile to be manufactured in them appears to be approximately quartered.

6. A manufacturing mould as claimed in one of the preceding claims, **characterised in that** at least two manufacturing mould portions (3 to 6), which may be split from one another, remain connected together via a joint (10, 11), wherein, in particular, one of the manufacturing mould portions (3 to 6) is provided and constructed at least substantially to form an undivided profile leading edge, despite the splitting of the manufacturing mould, whereby, in particular, at least one of the manufacturing mould portions (3 to 6) has a mould extension (12 to 16) for continuing the manufacturing mould, which may be mounted when the manufacturing mould is split and may be demounted before the manufacturing mould is assembled.

7. A manufacturing mould as claimed in one of the preceding claims, **characterised in that** the manufacturing mould may be split in order to manufacture rotor blade portions in the manufacturing mould portions (3 to 6), and the manufacturing mould portions (3 to 6) may be reassembled, preferably to form the complete manufacturing mould, in order to connect rotor blade portions together, wherein, in particular, for the purpose of an accurately fitting connection of manufacturing mould portions (3 to 6) on one another or to one another, guide elements, particularly locating pegs or the like, are provided, wherein, in particular, manufacturing mould portions (3 to 6) are connectable, particularly lockable, together.

8. A manufacturing mould as claimed in one of the preceding claims, **characterised in that** a working platform may be positioned between manufacturing mould portions (3 to 6) which have been separated from one another, whereby, in particular, a working platform, which is movable up and down, is provided in the parting region of two manufacturing mould portions (3 to 6).

9. A method of manufacturing a rotor blade using a manufacturing mould as claimed in one or more of the preceding claims, **characterised in that** the manufacturing mould is split, rotor blade portions (17 to 20) are manufactured in portions (3 to 6) of the manufacturing mould and the manufacturing mould is closed again in order to connect rotor blade portions (17 to 20) together, preferably to adhere them together.

10. A method as claimed in claim 9, **characterised in that** the rotor blade portions (17 to 20) are manufactured with a plastic technology, whereby, in particular, at least one resin and at least one fibre layer, preferably of glass fibres and/or carbon fibres, are used in the plastic technology, whereby, in particular, a transfer moulding technology is used or an infusion technology is used, particularly an infusion technology assisted by vacuum.

11. A method as claimed in claim 10, **characterised in that** a laminating technology is used.

12. A method claimed in one of claims 9 to 11, **characterised in that** at least one prefabricated spar cap (23) is positioned in at least one portion of the manufacturing mould, whereby, in particular, portions of a divided spar cap (23) are positioned in at least two portions of the manufacturing mould.

13. A method as claimed in one of claims 1 to 12, **characterised in that** before the manufacturing mould is closed at least one web (22) is positioned in at least one portion of the manufacturing mould, whereby, in particular, for the purpose of the form-locking arrangement of the web (22) on a rotor blade portion (17 to 20), at least one holding fixture (21) for the web (22) is provided, whereby, in particular, the holding fixture (21) is constituted substantially approximately in the shape of a U-profile shaped rail.

14. A method as claimed in claim 12, **characterised in that** a simple, prefabricated plate element is installed as the web (22).

## Revendications

1. Moule de fabrication pour la fabrication d'une pale de rotor pour éolienne, dans lequel la pale de rotor finie présente, au moins dans une région de son étendue longitudinale, entre un pied de pale de rotor et un bout de pale de rotor, un profil de section transversale aérodynamique qui présente un bord d'attaque et un bord de fuite qui sont reliés entre eux via un côté aspiration et un côté refoulement du profil de section transversale, **caractérisé en ce que** le moule de fabrication peut être divisé, le long d'au moins une surface de séparation (1, 2) qui s'étend dans la direction longitudinale de la pale de rotor et entre le bord d'attaque et le bord de fuite du profil par division simultanée du côté aspiration et du côté refoulement, en un élément de moule de fabrication (4, 6) pour la fabrication d'un élément de pale de rotor comprenant le bord d'attaque du profil et en un élément de moule de fabrication (3, 5) pour la fabrication d'un élément de profil de pale de rotor comprenant le bord de fuite du profil.

2. Moule de fabrication selon la revendication 1, **caractérisé en ce que** la surface de séparation (1) est orientée de manière sensiblement perpendiculaire.

3. Moule de fabrication selon la revendication 1 ou 2, **caractérisé en ce qu'**au moins l'un des éléments de moule de fabrication (3-6) est lui-même divisible.

4. Moule de fabrication selon la revendication 3, **caractérisé en ce qu'**une surface de séparation (2) pour la division de l'élément de moule de fabrication (3-6) divisible est orientée de manière sensiblement orthogonale à la surface de séparation (1) pour la division des éléments de moule de fabrication (3-6).

5. Moule de fabrication selon la revendication 3 et 4, **caractérisé en ce que** le moule de fabrication est divisible en deux éléments de moule (3-6) qui sont eux-mêmes respectivement redivisibles de façon telle que le profil de pale de rotor à fabriquer dans ceux-ci paraît sensiblement divisé en quatre.

6. Moule de fabrication selon l'une des revendications précédentes, **caractérisé en ce qu'**au moins deux éléments de moule de fabrication (3-6) séparables l'un de l'autre restent reliés entre eux par l'intermédiaire d'une articulation (10, 11), en particulier l'un des éléments de moule de fabrication (3-6), malgré la division du moule de fabrication, étant conçu et prévu au moins dans une large mesure pour le formage d'un bord d'attaque non divisé du profil, et en particulier au moins l'un des éléments de moule de fabrication (3-6) présentant, pour sa continuation, un complément de moule (12-16) pouvant être monté lorsque le moule de fabrication est divisé et pouvant être démonté avant un assemblage du moule de fabrication.

7. Moule de fabrication selon l'une des revendications précédentes, **caractérisé en ce que** le moule de fabrication est divisible pour fabriquer des éléments de pale de rotor dans les éléments de moule de fabrication (3-6), et **en ce que** les éléments de moule de fabrication (3-6), peuvent être, de nouveau, assemblés, de préférence pour former le moule de fabrication complet, afin de relier entre eux des éléments de pale de rotor, et dans lequel sont prévus, en particulier pour le raccordement ajusté d'éléments de moule de fabrication (3-6) les uns contre les autres ou les uns avec les autres, des éléments de guidage, en particulier des goujons d'assemblage ou équivalent, des éléments de moule de fabrication (3-6) pouvant en particulier être reliés, en particulier verrouillés, entre eux.

8. Moule de fabrication selon l'une des revendications précédentes, **caractérisé en ce qu'**une plateforme de travail peut être insérée entre des éléments de moule de fabrication (3-6) séparés les uns des autres, en particulier une plateforme de travail déplaçable vers le haut et vers le bas étant prévue dans la zone de séparation de deux éléments de moule de fabrication (3-6).

9. Procédé de fabrication d'une pale de rotor utilisant un moule de fabrication selon une ou plusieurs des revendications précédentes, **caractérisé en ce que** le moule de fabrication est divisé, des éléments de pale de rotor (17-20) sont fabriqués dans des éléments (3-6) du moule de fabrication et le moule de fabrication est de nouveau fermé pour relier entre eux, de préférence pour coller entre eux, les éléments de pale de rotor (17-20).

10. Procédé selon la revendication 9, **caractérisé en ce que** les éléments de pale de rotor (17-20) sont fabriqués au moyen d'une technologie des matières plastiques, dans laquelle on utilise en particulier pour la technologie des matières plastiques au moins une résine et au moins une strate fibreuse, en particulier en fibres de verre et/ou en fibres de carbone, une technique de moulage par transfert ou une technique par infusion, en particulier une technique par infusion sous vide, étant en particulier utilisée.

11. Procédé selon la revendication 10, **caractérisé en ce qu'**on utilise une technique de stratification.

12. Procédé selon l'une des revendications 9 à 11, **caractérisé en ce qu'**est introduite au moins une bande préfabriquée (23) dans au moins une partie du moule de fabrication, en particulier des éléments d'une bande (23) divisée étant introduits dans au moins deux éléments du moule de fabrication.

13. Procédé selon l'une des revendications 9 à 12, **caractérisé en ce qu'**est insérée, avant la fermeture du moule de fabrication au moins une barrette (22) dans au moins un élément du moule de fabrication, au moins un logement (21) de la barrette (22) étant prévu en particulier pour la mise en place de la barrette (22) par liaison de forme sur un élément de pale de rotor (17-20), en particulier le logement (21) étant configuré sensiblement en forme de glissière en profilé en U.

14. Procédé selon la revendication 12, **caractérisé en ce qu'**est inséré, en tant que barrette (22), un élément simple préfabriqué en forme de plaque.
